# EUROPEAN PATENT SPECIFICATION

(11) **EP 4 050 167 B1**
(45) Date of publication and mention of the grant of the patent: **15.04.2026**
(21) Application number: 22158830.4
(22) Date of filing: 25.02.2022
(51) Int. Cl.: E03C 1/04, E03C 1/05, F24D 17/00

(54) **SYSTEM FOR THE TEMPERATURE CONTROL OF AN ELECTRONIC SHOWER AND METHOD OF PREVENTION/DISINFECTION OF LEGIONELLA USING THE SAME**
SYSTEM ZUR TEMPERATURREGELUNG EINER ELEKTRONISCHEN DUSCHE UND VERFAHREN ZUR VORBEUGUNG/DESINFEKTION VON LEGIONELLEN UNTER VERWENDUNG DESSELBEN
SYSTÈME DE RÉGLAGE DE LA TEMPÉRATURE D'UNE DOUCHE ÉLECTRONIQUE ET PROCÉDÉ DE PRÉVENTION/DÉSINFECTION DES LÉGIONELLES L'UTILISANT

(30) Priority: 26.02.2021 ES 202130161
(43) Date of publication of application: 31.08.2022
(73) Proprietor: Caspro, S.A., 08759 Vallirana - Barcelona (ES)
(72) Inventor: TRES CASAS, Daniel, 08759 Vallirana (Barcelona) (ES)
(74) Representative: Ungria López, Javier

(56) References cited:
- EP-A1- 2 910 694
- EP-A1- 3 029 208
- WO-A1-2006/065120

## Description

### OBJECT OF THE INVENTION

The present invention discloses a system for the temperature control of an electronic shower that enables preventing and disinfecting legionella, either by the user of the electronic shower or by maintenance personnel. In turn, it allows for significant energy and water savings.

It has a particular application in the industrial field relating to thermostatic taps.

### TECHNICAL PROBLEM TO BE RESOLVED AND BACKGROUND OF THE INVENTION

In the current state of the art, shower and/or bath sanitation installations are known, wherein water control is carried out by means of an electronic module, equipped with hot and cold water inlets.

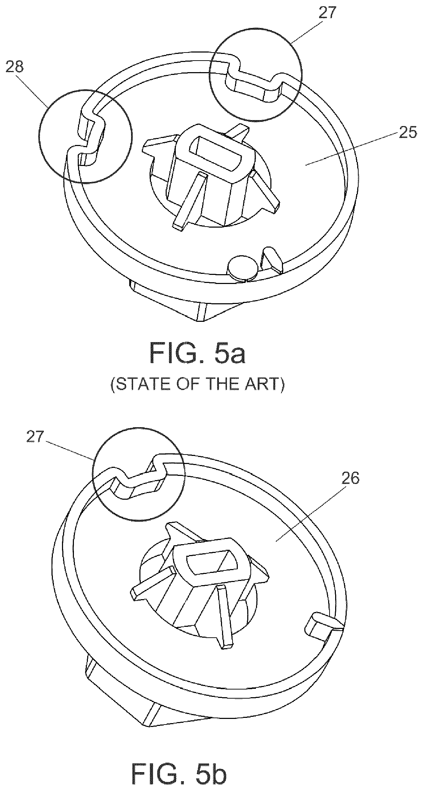

In the state of the art, all shower systems, whether manual or electronic such as the one disclosed in the European patent application with publication number EP3029208A1, have temperature limiters to prevent the user from selecting temperatures above 50 °Celsius. This temperature limitation is carried out to avoid accidental burns. The maximum and minimum limitation is carried out by means of a "limiting disc" (Fig. 5a) connected to the motor of the temperature regulating valve. The limiting disc has two perimeter recesses that mechanically activate respective limit switches that correspond to the usual minimum temperature of 25° and maximum temperature of 45° for a bath, but the function of which is to mechanically protect the system and avoid burns for temperatures above 45°.

The above limitation implies that bathroom areas where bacteria such as legionella accumulate require specific disinfection equipment capable of spraying water at 60 °Celsius in accordance with regulations. This temperature of 60 °Celsius is the minimum temperature that disinfection equipment must reach in accordance with regulations.

Shower devices having protection against legionella are known in the prior art. For instance, the patent application with publication number WO2006065120A1 discloses a device for purifying tap water for a shower comprising a filter, a control unit for flushing and/or thermal cleansing of the filter according to a pre-set program, and with signalling means for giving a visual signal that is indicative for a stage of the program carried out.

Shower devices having electronic control systems are known in the prior art. For example, the patent application with publication number EP2910694 A1 discloses a shower control system. The shower control system includes a controller in communication with a plurality of output devices located within a shower enclosure. The controller is configured to control the plurality of output devices. The shower control system further includes a control panel in communication with the controller and configured to provide a graphical user interface for controlling the plurality of output devices. The control panel includes an electronic display configured to present dynamic content, one or more static buttons, and a touch-sensitive panel overlaying both the electronic display and the one or more static buttons. The touch-sensitive panel is configured to detect a user interaction with both the one or more static buttons and the dynamic content presented via the electronic display.

Therefore, it would be desirable that the very shower systems (or taps in general) could prevent and/or disinfect legionella and not have to depend on disinfection equipment. This would provide great economic savings and a reduction in the periods between consecutive disinfections, which would increase the safety of the installations where the shower systems are located.

### DESCRIPTION OF THE INVENTION

The present invention is a system for the temperature control of an electronic shower that increases the temperature of the water up to 65° in a safety manner for the user, preventing or eliminating legionella bacteria. In addition, the amount of water used for preventing and disinfecting legionella bacteria is limited to a time interval of 5 minutes of circulation for prevention and 10 minutes of circulation for disinfection. Temperature and time are variables that are established by the regulations.

Therefore, in order to achieve the above advantages and objectives, in a first aspect of the present invention, a system for the temperature control of an electronic shower (or tap) is disclosed, comprising an electro-hydraulic control housing, which can be placed isolated from a wet area where the electronic shower is located. The electro-hydraulic control housing is connected to a power source, to a cold water inlet, to a hot water inlet and to a plurality of water outlets. Moreover, the electro-hydraulic control housing comprises: a control circuit, a temperature regulating valve for the cold water inlet and the hot water inlet, wherein the temperature regulating valve has a motor governed by the control circuit and configured to mix water from the hot water inlet and the cold water inlet, a temperature sensor located at the outlet of the temperature regulating valve, and a selector valve for the water outlets connected to a temperature sensor outlet and to a water outlet selected from at least one of a plurality of water outlets. The control circuit is electrically connected to at least the temperature regulating valve, the temperature sensor and the selector valve for the water outlets. The system of the present invention additionally comprises a luminous control device locatable in the wet area where the electronic shower is located. The luminous control device is electrically connected to the control circuit. The luminous control device comprises at least one input interface, the control circuit being configured to select a temperature of at least 65 °Celsius for the water outlet measured in the temperature sensor, by means of a coded activation that can be entered through the input interface of the luminous control device, thus obtaining the temperature of 65° at which legionella is prevented or eliminated. The system further comprises a limiting disc coupled to a rotation axis of the motor of the temperature regulating valve for rotating the limiting disc, wherein the limiting disc comprises a perimeter recess that mechanically activates a limit switch of the system by facing each other for the control circuit to determine the 0° position of the limiting disc that corresponds to a minimum temperature of the water at the water outlet of the temperature sensor. The system of the present invention lacks a mechanical limitation for the maximum bath temperature (45°) since it must enable a temperature of 65° to be reached for the prevention/disinfection of legionella. To do this, the control circuit, based on the temperature measured by the temperature sensor, is configured to rotate the limiting disc until the minimum temperature of the water is at least 65 °Celsius at the system outlet. Therefore, the limiting disc of the system of the present invention lacks a perimeter recess for the maximum bath temperature (45°). In the present invention, the only recess in the limiting disc is made to correspond to the minimum temperature of the water at the system outlet, which makes it possible to rotate the limiting disc to a maximum angular opening (for example 360°) providing a greater probability that the water outlet is at least 65° when the source (boiler) that provides the water does not supply water at values much higher than 65°. All of the above enables the electric motor to be protected from excessive and accidental rotation greater than the maximum angular opening thereof, in addition to having a fine adjustment of the temperature between the mains temperature and at least 65° to eliminate legionella.

In an embodiment of the invention, the plurality of water outlets is selected from at least one of the set consisting of a shower head, a waterfall shower head, a handheld shower head and jets.

In another embodiment of the invention, the selector valve for the water outlet is configured to select a water outlet selected from the shower head, the waterfall shower head, the handheld shower head, the jets and a combination of the above.

In another embodiment of the invention, the input interface of the luminous control device comprises the following backlit buttons: an On/Off button to turn the system on/off; a positive temperature regulation button that enables the temperature value to be increased; a negative temperature regulation button that enables the temperature value to be decreased; a selector button for the water outlet through the shower head; a selector button for the water outlet through the waterfall shower head; a selector button for the water outlet through the handheld shower head; and, a selector button for the water outlet through the jets.

In another embodiment of the invention, the luminous control device additionally comprises a screen that indicates at least one of the following functions: "thermal shock", "prevention", "disinfection", and "setpoint temperature reached" (65 °Celsius for preventing or disinfecting legionella), "error" and "cycle completed".

The coded activation to carry out the "thermal shock" function comprises pressing the On/Off, positive temperature regulation and negative temperature regulation buttons for at least five seconds, and releasing the On/Off, positive temperature regulation and negative temperature regulation buttons, a spinning square shape being displayed on the screen. The coded activation to carry out the "prevention" function comprises carrying out the "thermal shock" function and additionally comprises pressing the On/Off button for five seconds so that the control circuit selects a temperature of at least 65 °Celsius for the water outlet. Alternatively, the "disinfection" function comprises carrying out the "thermal shock" function and additionally comprises pressing the On/Off button for ten seconds so that the control circuit selects a temperature of at least 65 °Celsius for the water outlet. Regardless of whether the "prevention" or "disinfection" function has been selected, when the temperature of 65° is reached in less than a predetermined time value (preferably eight minutes), the control circuit activates the "setpoint temperature reached", which comprises displaying the value "65°" on the screen. The control circuit detects that the temperature of 65° has been reached for the water outlet, by means of the temperature sensor. The time required for the passage of water at 65° to prevent legionella is five minutes. For this reason, the "prevention" function additionally comprises that the control circuit enables the water outlet at 65° for five minutes. Similarly, the time required for the passage of water at 65° to eliminate (disinfect) legionella is ten minutes. For this reason, the "disinfection" function additionally comprises that the control circuit enables the water outlet at 65° for ten minutes. The electronic control selects this operation consecutively for each of the outlets and completes the cycle of 5 or 10 minutes depending on the selection. The luminous control device may additionally comprise wireless communication means, such as Wi-Fi or Bluetooth, for connection thereof to a control centre, which enables the activation of the remote control system as well as its functions to be controlled. This is especially useful in establishments where users rotate, such as hotels, sports centres, etc. Once the cycle is completed, the system of the present invention may additionally comprise warning means to remotely issue a warning to the control centre (for example, a hotel reception) confirming that the treatment has been carried out (in the different hotel rooms, following the example).

When the control circuit, by means of the temperature sensor, detects that the temperature of at least 65 °Celsius is not reached for the water outlet in a time interval less than a predetermined time value (preferably eight minutes), it activates the "error" function, displaying the message "E6" on the screen or any other message that can be alphanumerically represented on the screen.

When the control circuit, by means of the temperature sensor, detects that the temperature of at least 65 °Celsius has been reached for the water outlet in a time interval less than a predetermined time value (preferably eight minutes) and that the water has been circulating for five minutes for the "prevention" function or ten seconds for the "disinfection" function, it activates the "cycle completed" function, displaying the message "CO" on the screen.

The "thermal shock" functionality of the system of the present invention is a second aspect of the invention that defines a method of prevention/disinfection of legionella.

Therefore, in a second aspect of the invention, a method of prevention/disinfection of legionella is described by means of the system for the temperature control of an electronic shower of the first aspect of the invention. The method of prevention/disinfection of legionella comprises activating the "thermal shock" function, which comprises the following steps:
- pressing the On/Off, positive temperature regulation and negative temperature regulation buttons for five seconds; and releasing all buttons;
- displaying a spinning square shape on the screen, which implies that the "thermal shock" function/mode has been correctly started;
- choosing, by means of the On/Off button, between the "prevention" function/mode if the On/Off button is held down for five seconds, and the "disinfection" function/mode if the On/Off button is held down for ten seconds;
- raising the water temperature to 65° for a period of less than eight minutes, and:
   ∘ if the system does not get the water in the temperature sensor to reach 65° in less than eight minutes, the control circuit activates the "error" function and sends a signal to the luminous control device to display the message "E6" on the screen;
   ∘ if the system manages to get the water at the outlet(s) thereof to reach 65° in less than eight minutes, the control circuit activates the "setpoint temperature reached" function and sends a signal to the luminous control device to display a value of "65°" on the screen;
- letting the water flow at at least 65° for five minutes or ten minutes, depending on whether the "prevention" function or the "disinfection" function has been activated, respectively, for each of the water outlets automatically without human intervention and indicating in a luminous manner by means of the backlit buttons the avenue through which the water is coming out, such that if water was not really coming out due to reasons beyond the control of the system, the user or maintenance personnel could take action;
- displaying the message "CO" on the screen which indicates that the cycle has been completed, once the complete cycle has finished, i.e., the water has come out at a temperature of 65° for the established time (five or ten minutes); and waiting for a user to press the On/Off button. In this way, the user or the maintenance operator is aware that the cycle has been successfully carried out.

The method of prevention/disinfection of legionella of the second aspect of the invention additionally comprises a step wherein if the mains power supply is interrupted, for example due to a power failure, the system of the first aspect of the invention shuts down and all the water outlets are closed.

### BRIEF DESCRIPTION OF THE FIGURES

To complete the description, and for the purpose of helping to make the features of the invention more readily understandable, this description is accompanied by a set of figures constituting an integral part of the same, which by way of illustration and not limitation represent the following:
Figure 1 shows a general view of the system of the present invention in a shower installation according to an embodiment of the invention wherein four possible outlets for water are observed, namely: the shower head, the waterfall shower head, the handheld shower head and the jets. The luminous control device is also shown.
Figure 2 shows a view of the connection of the components comprised in the electro-hydraulic control housing with the four possible outlets for water. Also the connection of the electro-hydraulic control housing with an external power source which in Europe is 220V AC and with the luminous control device located outside the electro-hydraulic control housing.
Figure 3a shows a view of an operating status of the luminous control device, where it is reported that the water is at 65 degrees Celsius, a temperature at which the elimination of the legionella bacteria is ensured (possible losses between the measurement and the water outlet are compensated) since legionella is eliminated at 60° in accordance with regulations. The four selector buttons for water outlets are also observed, namely: the shower head, the waterfall shower head, the handheld shower head and the jets.
Figure 3b shows the status of the luminous control device when the activation sequence for the "prevention" or "disinfection" functions has been entered in the system.
Figures 4a and 4b show a flow diagram for the activation, in the system of the present invention, of the "prevention" and "disinfection" functions.
Figure 5a shows a limiting disc of the state of the art with two recesses to mechanically limit the minimum temperature (25°) and the maximum temperature (45°) of normal use.
Figure 5b shows a limiting disc of the system of the present invention with a single recess to mechanically limit the minimum temperature.

Below, a list is provided of the different elements represented in the figures making up the invention:
1. Temperature control system of an electronic shower.
2. Electro-hydraulic control housing.
3. Control circuit.
4. Temperature regulating valve.
5. Temperature sensor.
6. Selector valve for water outlet.
7. Power source.
8. Luminous control device.
9. Screen.
10. On/Off button.
11. Positive temperature regulation button.
12. Negative temperature regulation button.
13.Selector button for water outlet through the shower head.
14. Selector button for water outlet through the waterfall shower head.
15. Selector button for water outlet through the handheld shower head.
16. Selector button for water outlet through the jets.
17. Cold water inlet.
18. Hot water inlet.
19. Shower head.
20. Waterfall shower head.
21. Handheld shower head.
22. Jets.
23. Motor of the temperature regulating valve.
24. Solenoids.
25. Limiting disc of the state of the art.
26. Limiting disc of the system of the present invention.
27. Recess of the limiting disc for the lowest temperature of the system.
28. Recess of the limiting disc for the highest temperature of the systems of the state of the art.
29. Not used
30. Activation Sequence
31. "Thermal shock" function/mode start-up
32. "Prevention"/" disinfection" / "error"
33. "Setpoint temperature reached" / "error"
34. "Prevention"/"disinfection" function running
35. Cycle completed "CO": "prevention"/"disinfection" function successfully completed.

### DETAILED DESCRIPTION

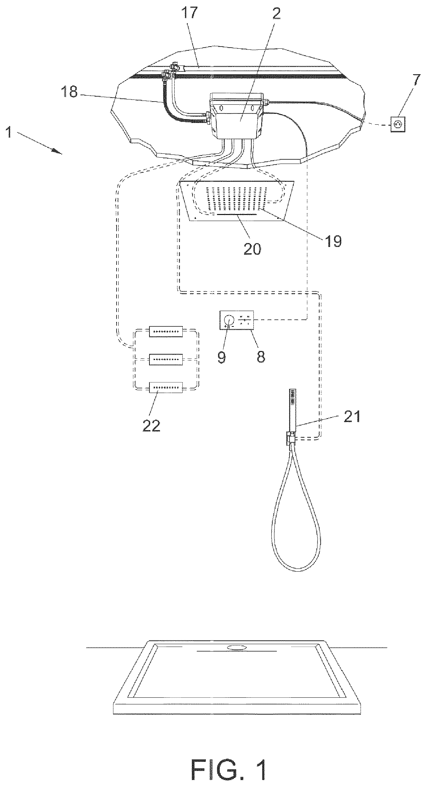

The present invention relates to a novel system for the temperature control (1) of an electronic shower or tap in a hot water shower and/or bath sanitation installation that is capable of carrying out a disinfection of legionella while maintaining a high degree of safety for the user during normal use thereof. During normal use, the luminous control device (8) displays a numerical code to indicate the exact temperature of the water. In this way, the user of the installation shown in Figure 1 could make use of the installation by entering the desired temperature for the water outlet (19, 20, 21, 22).

In order to achieve the foregoing advantages and objectives, the system (1) lacks mechanical temperature limiters for the highest temperature, typical of the systems of the state of the art. Figure 5a shows the limiting disc (25) of the prior art with the perimeter recesses (27, 28). Both the limiting disc (25) of the prior art and the limiting disc (26) of the present invention shown in Figure 5b are coupled to the rotation axis of the motor of the temperature regulating valve (23). The recess (27) present in both limiting discs (25, 26) has the function of protecting the electric motor from an excessive and accidental rotation. However, the recess (28) present only in the limiting disc (25) of the prior art also has the function of establishing a maximum temperature limit of around 45 °Celsius to avoid burns. And the recess (27) of the limiting disc (25) of the prior art has the function of limiting the minimum temperature of the water to 25 °C. The system of the present invention comprises the limiting disc (26) to mechanically limit the travel thereof. The rotation of the limiting disc (26) of the present invention is controlled by the control circuit (3) that detects the 0° position of the recess (27). To control the maximum temperature, instead of the recess (28), the system (1) of the present invention uses the control circuit (3), which controls the temperature at which the water comes out. In other words, the control circuit (3) receives the temperature measured by the temperature sensor (5) to control the temperature of the water at the system outlet. In this way, the control circuit (3) controls the temperature range typically used in "normal" use of a shower, such as the range up to 45 °Celsius, and also enables only water above 45° and up to at least 65° to be used by means of a coded activation of additional functions such as the legionella "prevention" and "disinfection" functions, for which a temperature of 65 °Celsius is required. Since the usable range of the limiting disc (26) is of a certain maximum angle, the system (1) can be used to select temperatures from the water temperature to the mains temperature, up to the 65 °C required for legionella. It must be taken into account that the rotation of the limiting disc is associated with the amount of hot water that is mixed with cold water to reach the selected temperature.

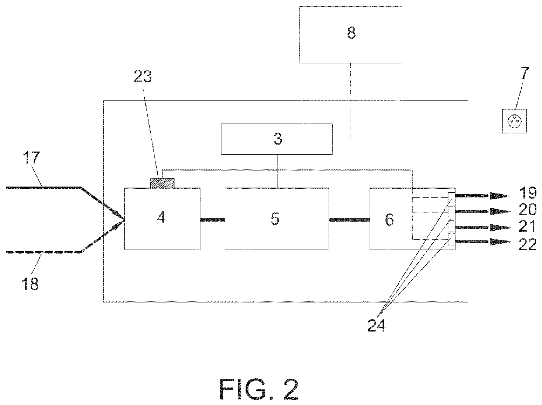

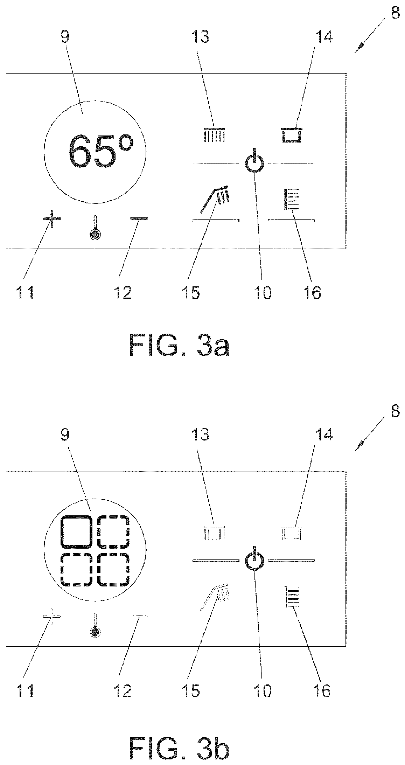

In a first embodiment shown in Figure 1, the system (1) for the temperature control of an electronic shower comprises the electro-hydraulic control housing (2) concealed in a false ceiling and therefore isolated from the humidity generated by the shower. The electro-hydraulic control housing (2) is connected to an external 220v AC power source (7) and is also isolated from humidity as legally established. The electro-hydraulic control housing (2) comprises a transformer (not shown) from 220v AC to 24v DC with which it feeds the luminous control device (8) at 5v DC. The electro-hydraulic control housing (2) is connected to the cold water inlet (17), to the hot water inlet (18) and to the plurality of water outlets selected from the shower head (19), the waterfall shower head (20), the handheld shower head (21) and the jets (22). Figure 2 shows that the electro-hydraulic control housing (2) comprises the control circuit (3) electrically connected to: the temperature regulating valve (4) of the cold water inlet (17) and of the hot water inlet (18), to the temperature sensor (5) located at the outlet of the temperature regulating valve (4), and to the selector valve (6) for the water outlets. The temperature regulating valve (4) is connected to the motor (23) governed by the control circuit (3). The selector valve (6) for the water outlet comprises solenoids (24), each solenoid (24) arranged for the corresponding water outlet, such that the control circuit (3) is configured to open/close said solenoids (24). Returning to Figure 1, the system (1) comprises the luminous control device (8), which is located in the wet area where the electronic shower is located for interaction thereof with the user of the shower. Therefore, the luminous device (8) serves as the input interface to the system (1), and is located near the water outlets (19, 20, 21, 22) that generate water vapour and therefore humidity. The luminous control device (8) is electrically connected (see Figures 1 and 2) with the control circuit (3) and comprises the buttons (10, 11, 12, 13, 14, 15) that serve as part of an interface input (see Figures 3a-3b). The control circuit (3) is configured to select a temperature of 65 °Celsius for the water outlet (19, 20, 21, 22), thus carrying out the activation of the "prevention" and/or "disinfection" of legionella functions. To do this, a user must enter a coded activation by means of the buttons (10, 11, 12, 13, 14, 15, 16).

Figures 3a and 3b show the luminous control device (8) comprising: the screen (9) and the following backlit buttons: the On/Off button (10) to turn the system (1) on/off, the positive temperature regulation button (11) that enables the water temperature value at the system outlet to be increased, the negative temperature regulation button (12) that enables the water temperature value at the system outlet to be decreased, the selector button (13) for the water outlet through the shower head (19), the selector button (14) for the water outlet through the waterfall shower head (20), and the selector button (16) for the water outlet through the jets (22). In Figure 3a, the screen (9) indicates that a temperature of 65° has been reached for the water at the outlet thereof through any of the water outlets (19-22) of the system (1).

When the system is to be used for a "normal" bath by the user, the system follows the following procedure for use thereof:
- the user selects a temperature for the bath that is limited to 45° by default by the control circuit (3) with no lower limitation, the user being able to select temperatures below 25° (minimum recommended comfort temperature), even reaching the temperature of the water at the distribution mains;
- the user selects the water outlet among the available outlets: shower head (19), waterfall shower head (20), handheld shower head (21) and jets (22);
- the system enables the water outlet;
- when the temperature sensor (5) detects that the water has the temperature selected by the user, the system (1) prolongs the water outlet between three and five seconds to ensure that the ducts do not remain full of water with a lower temperature to the one selected by the user;
- next, the system cuts off the water outlet and goes into "pause" mode;
- at that moment, the user can make use of the system and start the bath at the selected temperature by pressing the "on/off" button.

The foregoing procedure has the advantage of avoiding the consumption of water and energy that usually occurs before the user starts the bath.

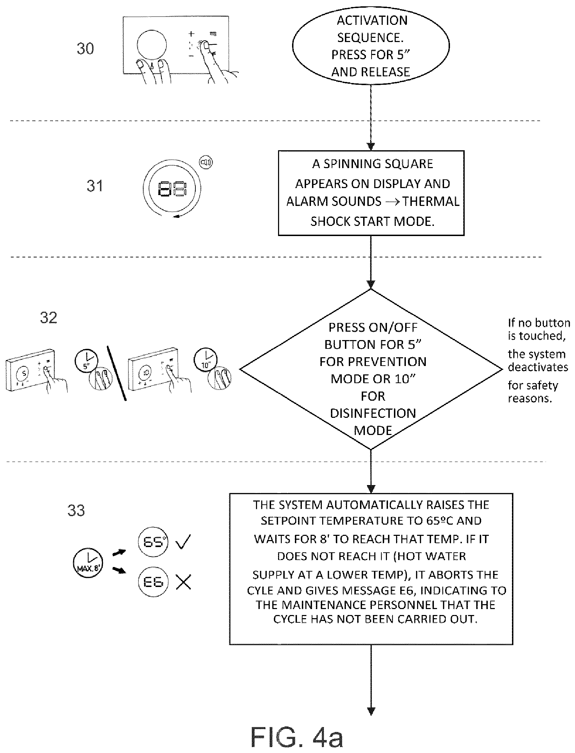

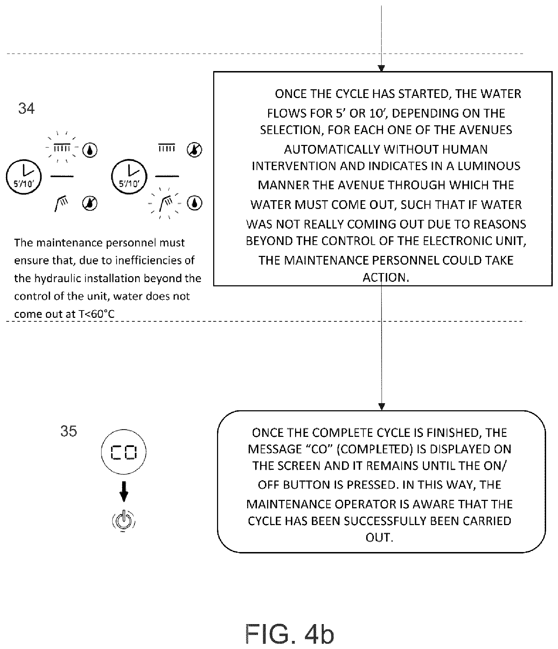

In addition to the "normal" use of the system of the present invention, the system (1) enables preventing or eliminating legionella bacteria. For this, the water at the outlet thereof must reach 65°. To prevent or eliminate bacteria, the system has several functionalities that are explained in the flow diagram of Figures 4a and 4b. Additionally, and due to the times established for the functionalities, the exact amount of water is used, which implies water and energy savings. Among the functionalities of the system, which are activated by means of the buttons of the luminous control device (8), the following functions can be found: "thermal shock" that includes the phases of prevention and disinfection, "prevention", "disinfection", "setpoint temperature reached" (65 °Celsius for the prevention and/or disinfection of legionella), "error" and "cycle completed".

Therefore, Figures 4a and 4b show that, firstly (30), the activation of the "thermal shock" function is required. The coded activation to carry out the "thermal shock" function comprises pressing the On/Off button (10), positive temperature regulation button (11) and negative temperature regulation button (12) for five seconds, and releasing all the aforementioned buttons. In this way, a spinning square shape is displayed (31) on the screen (9) (see Figure 3b). This implies that the "thermal shock" function/mode has been correctly started. Subsequently (32), by means of the On/Off button (10), the choice is made between the "prevention" function/mode, if the On/Off button (10) is held down for five seconds, or the "disinfection" function/mode, if the On/Off button (10) is held down for ten seconds. Next (33), whether the "prevention" function/mode or the "disinfection" function/mode has been chosen, the system (1) attempts, for a period of less than eight minutes, to raise the temperature of the water up to 65°. If the system (1) manages to get the water at the outlet (19 to 22) thereof to reach 65° in less than eight minutes, the control circuit (3) activates the "setpoint temperature reached" function and sends a signal to the luminous control device (8) to display a value of "65°" on the screen (9) (see Figure 3a). If the system (1) does not get the water in the temperature sensor (5) to reach 65° in less than eight minutes, the control circuit (3) activates the "error" function and sends a signal to the luminous control device (8) to display the message "E6" on the screen (9). Next (34), if the system (1) has managed to get the water at the outlet (19 to 22) thereof to reach 65°, the water flows for five minutes or ten minutes, depending on whether the "prevention" function or the "disinfection" function has been activated, for each of the water outlets (19 to 22) automatically without human intervention and indicates in a luminous manner by means of the backlit buttons (13 to 16) the avenue through which the water must come out, such that if water was not really coming out due to reasons beyond the control of the system, the user or maintenance personnel could take action. Finally (35), once the complete cycle has finished, i.e., the water has come out at a temperature of 65° for the established time (five or ten minutes), the message "CO" (completed) appears on the screen (9) and remains until the On/Off button is pressed. In this way, the user or the maintenance operator is aware that the cycle has been successfully carried out.

If the mains power supply is interrupted (power failure), the system (1) shuts down and all the outlets (19 to 22) are closed.

The control circuit (3) also comprises a timer that enables the system (1) to automatically come out of the aforementioned functions after a period of time, preferably after ten seconds, avoiding that the system (1) remains in the "prevention" function or in the "disinfection" function where water at 65° could cause burns to the user of the system (1).

Additionally, the luminous control device (8) comprises an error detector module configured to diagnose possible anomalies of the system (1) by activating the "error" function. To do this, the screen (9) of the luminous control device (8) indicates by means of a two-digit alphanumeric code the cause of the anomalies that may appear in the system (1). In addition to the aforementioned error with "E6" messages, the following error messages may be indicated on the screen (9):
- "E1": indicates a possible connection failure between the control device (8) and the electro-hydraulic control box (2),
- "E2": indicates a possible malfunction of the motor of the temperature regulating valve (23),
- "E3": indicates a disconnection or malfunction of the temperature sensor (5),
- "E4": indicates a possible occasional misalignment of the motor of the temperature regulating valve (23),
- "E5": indicates a security failure in the system (1), so the system (1) will automatically shut down when the temperature sensor (5) detects a temperature outside the range for the specific use thereof.

The present invention should not be limited to the embodiment described herein. Other configurations may be carried out by those skilled in the art based on the present description. Accordingly, the scope of the invention is defined by the following claims.

## Claims

1. A system for the temperature control of an electronic shower comprising an electro-hydraulic control housing (2) isolated placeable from a wet area where the electronic shower is located; the electro-hydraulic control housing (2) is connected to a power source (7), to a cold water inlet (17), to a hot water inlet (18) and to a plurality of water outlets (19, 20, 21, 22);
wherein the electro-hydraulic control housing (2) comprises:
- a control circuit (3);
- a temperature regulating valve (4) for the cold water inlet (17) and for the hot water inlet (18); wherein the temperature regulating valve (4) has a motor (23) governed by the control circuit (3) and is configured to mix water from the hot water inlet and the cold water inlet;
- a temperature sensor (5) located at the outlet of the temperature regulating valve (4);
- a selector valve (6) for the water outlets (19, 20, 21, 22) connected to a water outlet of the temperature sensor (5) and to a water outlet selected from at least one of a plurality of water outlets (19, 20, 21, 22);
wherein the control circuit (3) is electrically connected to at least the temperature regulating valve (4), the temperature sensor (5) and the selector valve (6) for the water outlets (19, 20, 21, 22);
wherein the system (1) further comprises:
• a luminous control device (8) locatable in the wet area where the electronic shower is located; wherein the luminous control device (8) is electrically connected to the control circuit (3) and wherein the luminous control device (8) comprises at least one input interface (10, 11, 12, 13, 14, 15), the control circuit (3) being configured to select a temperature of at least 65 °Celsius for the water outlet of the temperature sensor (5), by means of a coded activation enterable through the input interface (10, 11, 12, 13, 14, 15) of the luminous control device (8);
• the system being **characterized by** further comprising
a limiting disc (26) which is coupled to a rotation axis of the motor (23) for rotating the limiting disc (26), wherein the limiting disc (26) comprises a single perimeter recess (27) and,
when the single perimeter recess
(27) mechanically activates a limit switch of the system the control circuit (3) determines a 0° position of the limiting disc (26) that corresponds to a minimum temperature of the water at the water outlet of the temperature sensor (5);
wherein the control circuit (3), based on the temperature measured by the temperature sensor (5), is configured to rotate the limiting disc (26) until the minimum water temperature is at least 65 °Celsius at the water outlet of the temperature sensor (5).

2. A system for the temperature control of an electronic shower according to claim 1, **characterised in that** the plurality of water outlets is selected from at least one of the set made up of a shower head (19), a waterfall shower head (20), a handheld shower head (21) and jets (22).

3. A system for the temperature control of an electronic shower according to claim 1, **characterised in that** the selector valve (6) for the water outlet is configured to select a water outlet selected between a shower head (19), a waterfall shower head (20), a handheld shower head (21), jets (22) and a combination of the above.

4. A system for the temperature control of an electronic shower according to claim 2 or 3, **characterised in that** the input interface of the luminous control device (8) comprises:
- an On/Off button (10) to turn the system (1) on/off;
- a positive temperature regulation button (11) that enables the temperature value to be increased;
- a negative temperature regulation button (12) that enables the temperature value to be decreased;
- a selector button (13) for the water outlet through the shower head (19);
- a selector button (14) for the water outlet through the waterfall shower head (20);
- a selector button (15) for the water outlet through the handheld shower head (21); and,
- a selector button (16) for the water outlet through the jets (22).

5. A system for the temperature control of an electronic shower according to claim 1, **characterised in that** the luminous control device (8) additionally comprises a screen (9) indicating at least one of the following functions:
- "thermal shock", which includes the "prevention" and "disinfection" functions;
- "prevention";
- "disinfection";
- "setpoint temperature reached";
- "error";
- "cycle completed".

6. A system for the temperature control of an electronic shower according to claims 4 and 5, **characterised in that** the coded activation to carry out the "thermal shock" function comprises pressing the On/Off button (10), positive temperature regulation button (11) and negative temperature regulation button (12) for at least five seconds, and releasing the On/Off button (10), positive temperature regulation button (11) and negative temperature regulation button (12).

7. A system for the temperature control of an electronic shower according to claim 6, **characterised in that** the coded activation to carry out the "prevention" function comprises carrying out the "thermal shock" function and additionally comprises pressing the On/Off button (10) for five seconds so that the control circuit (3) selects a temperature of at least 65 °Celsius for the water outlet.

8. A system for the temperature control of an electronic shower according to claim 6, **characterised in that** the "disinfection" function comprises carrying out the "thermal shock" function and additionally comprises pressing the On/Off button (10) for ten seconds so that the control circuit (3) selects a temperature of at least 65 °Celsius for the water outlet.

9. A system for the temperature control of an electronic shower according to any one of claims 7 to 8, **characterised in that** the "setpoint temperature reached" function comprises displaying the value "65°" on the screen (9) when the control circuit (3), by means of the temperature sensor (5), detects that the temperature of at least 65 °Celsius for the water outlet in a time interval less than a predetermined time value.

10. A system for the temperature control of an electronic shower according to claims 7 and 9, **characterised in that** the "prevention" function additionally comprises that the control circuit (3) enables the water outlet at at least 65° for five minutes.

11. A system for the temperature control of an electronic shower according to claims 8 and 9, **characterised in that** the "disinfection" function additionally comprises that the control circuit (3) enables the water outlet at at least 65° for ten minutes.

12. A system for the temperature control of an electronic shower according to any one of claims 7 to 8, **characterised in that** the "error" function comprises displaying the message "E6" on the screen (9) when the control circuit (3), by means of the temperature sensor (5), detects that the temperature of at least 65 °Celsius is not reached for the water outlet in a time interval less than a predetermined time value.

13. A system for the temperature control of an electronic shower according to any one of claims 10 to 11, **characterised in that** the "cycle completed" function comprises displaying the message "CO" on the screen (9).

14. A method of prevention/disinfection of legionella by means of the system for the temperature control of an electronic shower of any one of claims 5 to 13, wherein the method comprises activating the "thermal shock" function, which comprises the following steps:
o pressing (30) for five seconds the On/Off (10) button, positive temperature regulation button (11) and negative temperature regulation button (12); and releasing all buttons;
o displaying (31) a spinning square shape on the screen (9);
o choosing (32), by means of the On/Off button (10), between the "prevention" function/mode, if the On/Off button (10) is held down for five seconds, and the "disinfection" function/mode, if the On/Off button (10) is held down for ten seconds;
o raising (33) the temperature of the water to 65° for a period of less than eight minutes, and:
▪ if the system (1) does not get the water in the temperature sensor (5) to reach 65° in less than eight minutes, the control circuit (3) activates the "error" function and sends a signal to the luminous control device (8) to display the message "E6" on the screen (9);
▪ if the system (1) manages to get the water at the outlet (19 to 22) thereof to reach 65° in less than eight minutes, the control circuit (3) activates the "setpoint temperature reached" function and sends a signal to the luminous control device (8) to display a value of "65°" on the screen (9);
o letting water flow at at least 65° for five minutes or ten minutes, depending on whether the "prevention" function or the "disinfection" function has been activated, respectively, for each of the water outlets (19 to 22) automatically without human intervention and indicating in a luminous manner by means of the backlit buttons (13 to 16) the avenue through which the water is coming out;
o displaying (35) the message "CO" on the screen (9) which indicates that the cycle has been completed, once the complete cycle has finished and waiting for a user to press the On/Off button.

## Patentansprüche

1. System für die Temperatursteuerung einer elektronischen Dusche, das ein elektrohydraulisches Steuerungsgehäuse (2) umfasst, das gegenüber einem Nassbereich isoliert positioniert werden kann, in dem sich die elektronische Dusche befindet; wobei das elektrohydraulische Steuerungsgehäuse (2) mit einer Stromquelle (7), mit einem Kaltwasser-Einlass (17), mit einem Warmwasser-Einlass (18) sowie mit einer Vielzahl von Wasser-Auslässen (19, 20, 21, 22) verbunden ist;
wobei das elektrohydraulische Steuerungsgehäuse (2) umfasst:
- eine Steuerungsschaltung (3);
- ein Temperatur-Regulierventil (4) für den Kaltwasser-Einlass (17) und für den Warmwasser-Einlass (18), wobei das Temperatur-Regulierventil (4) einen Motor (23) aufweist, der von der Steuerungsschaltung (3) gesteuert wird und zum Mischen von Wasser von dem Warmwasser-Einlass und dem Kaltwasser-Einlass ausgeführt ist;
- einen Temperatursensor (5), der sich an dem Auslass des Temperatur-Regulierventils (4) befindet;
- ein Wählventil (6) für die Wasser-Auslässe (19, 20, 21, 22), das mit einem Wasser-Auslass des Temperatur-Sensors (5) und mit einem Wasser-Auslass verbunden ist, der aus wenigstens einem einer Vielzahl von Wasser-Auslässen (19, 20, 21, 22) ausgewählt wird;
wobei die Steuerungsschaltung (3) elektrisch mit wenigstens dem Temperatur-Regulierventil (4), dem Temperatur-Sensor (5) und dem Wählventil (6) für die Wasser-Auslässe (19, 20, 21, 22) verbunden ist;
wobei das System (1) des Weiteren umfasst:
• eine Leucht-Steuerungsvorrichtung (8), die in dem Nassbereich positioniert werden kann, in dem sich die elektronische Dusche befindet; wobei die Leucht-Steuerungsvorrichtung (8) elektrisch mit der Steuerungsschaltung (3) verbunden ist und wobei die Leucht-Steuerungsvorrichtung (8) wenigstens eine Eingabe-Schnittstelle (10, 11, 12, 13, 14, 15) umfasst, die Steuerungsschaltung (3) so ausgeführt ist, dass eine Temperatur von wenigstens 65 °C für den Wasser-Auslass des Temperatur-Sensors (5) mittels einer codierten Aktivierung ausgeführt ist, die über die Eingabe-Schnittstelle (10, 11, 12, 13, 14, 15) der Leucht-Steuerungsvorrichtung (8) eingegeben werden kann;
• und das System **dadurch gekennzeichnet ist, dass** es des Weiteren umfasst:
eine Begrenzungsscheibe (26), die mit einer Drehachse des Motors (23) zum Drehen der Begrenzungsscheibe (26) gekoppelt ist, wobei die Begrenzungsscheibe (26) eine einzelne Umfangsaussparung (27) umfasst, und
wenn die einzelne Umfangsaussparung (27) einen Grenzschalter des Systems mechanisch aktiviert, die Steuerungsschaltung (3) eine 0°-Position der Begrenzungsscheibe (26) bestimmt, die einer minimalen Temperatur des Wassers an dem Wasser-Auslass des Temperatur-Sensors (5) entspricht,
wobei die Steuerungsschaltung (3) so ausgeführt ist, dass sie auf Basis der durch den Temperatur-Sensor (5) gemessenen Temperatur die Begrenzungsscheibe (26) dreht, bis die minimale Wassertemperatur wenigstens 65 °C an dem Wasser-Auslass des Temperatur-Sensors (5) beträgt.

2. System für die Temperatursteuerung einer elektronischen Dusche nach Anspruch 1, **dadurch gekennzeichnet, dass** die Vielzahl von Wasser-Auslässen aus wenigstens einem aus der Gruppe ausgewählt wird, die aus einem Duschkopf (19), einem Wasserfall-Duschkopf (20), einem Hand-Duschkopf (21) und Strahldüsen (22) besteht.

3. System für die Temperatursteuerung einer elektronischen Dusche nach Anspruch 1, **dadurch gekennzeichnet, dass** das Wählventil (6) für den Wasser-Auslass so ausgeführt ist, dass ein Wasser-Auslass gewählt wird, der zwischen einem Duschkopf (19), einem Wasserfall-Duschkopf (20), einem Hand-Duschkopf (21), Strahldüsen (22) sowie einer Kombination daraus ausgewählt wird.

4. System für die Temperatursteuerung einer elektronischen Dusche nach Anspruch 2 oder 3, **dadurch gekennzeichnet, dass** die Eingabe-Schnittstelle der Leucht-Steuerungsvorrichtung (8) umfasst:
- eine An/Aus-Taste (10) zum An-/Ausschalten des Systems (1);
- eine Taste (11) für positive Temperaturregulierung, die es ermöglicht, den Temperaturwert zu erhöhen;
- eine Taste (12) für negative Temperaturregulierung, die es ermöglicht, den Temperaturwert zu verringern;
- eine Wähltaste (13) für den Wasser-Auslass über den Duschkopf (19);
- eine Wähltaste (14) für den Wasser-Auslass über den Wasserfall-Duschkopf (20);
- eine Wähltaste (15) für den Wasser-Auslass über den Hand-Duschkopf (21); sowie
- eine Wähltaste (16) für den Wasser-Auslass über die Strahldüsen (22).

5. System für die Temperatursteuerung einer elektronischen Dusche nach Anspruch 1, **dadurch gekennzeichnet, dass** die Leucht-Steuerungsvorrichtung (8) des Weiteren einen Bildschirm (9) umfasst, der wenigstens eine der folgenden Funktionen anzeigt:
- "Wärmeschock", der die Funktionen "Vorbeugung" und "Desinfektion" einschließt;
- "Vorbeugung";
- "Desinfektion";
- "Sollwert-Temperatur erreicht";
- "Fehler";
- "Zyklus abgeschlossen".

6. System für die Temperatursteuerung einer elektronischen Dusche nach den Ansprüchen 4 und 5, **dadurch gekennzeichnet, dass** die codierte Aktivierung zum Ausführen der Funktion "Wärmeschock" Drücken der An/Aus-Taste (10), der Taste (11) für positive Temperaturregulierung und der Taste (12) für negative Temperaturregulierung über wenigstens fünf Sekunden sowie Freigeben der An/Aus-Taste (10), der Taste (11) für positive Temperaturregulierung und der Taste (12) für negative Temperaturregulierung umfasst.

7. System für die Temperatursteuerung einer elektronischen Dusche nach Anspruch 6, **dadurch gekennzeichnet, dass** die codierte Aktivierung zum Ausführen der Funktion "Vorbeugung" Ausführen der Funktion "Wärmeschock" umfasst und darüber hinaus Drücken der An/Aus-Taste (10) über fünf Sekunden umfasst, so dass die Steuerungsschaltung (3) eine Temperatur von wenigstens 65 °C für den Wasser-Auslass auswählt.

8. System für die Temperatursteuerung einer elektronischen Dusche nach Anspruch 6, **dadurch gekennzeichnet, dass** die Funktion "Desinfektion" Ausführen der Funktion "Wärmeschock" umfasst und darüber hinaus Drücken der An/Aus-Taste (10) über zehn Sekunden umfasst, so dass die Steuerungsschaltung (3) eine Temperatur von wenigstens 65 °C für den Wasser-Auslass auswählt.

9. System für die Temperatursteuerung einer elektronischen Dusche nach einem der Ansprüche 7 bis 8, **dadurch gekennzeichnet, dass** die Funktion "Sollwert-Temperatur erreicht"; Anzeigen des Wertes "65 °" auf dem Bildschirm (9) umfasst, wenn die Steuerungsschaltung (3) mittels des Temperatur-Sensors (5) erfasst, dass die Temperatur wenigstens 65 °C für den Wasser-Auslass in einem Zeitintervall beträgt, das kürzer ist als ein vorgegebener Zeitwert.

10. System für die Temperatursteuerung einer elektronischen Dusche nach den Ansprüchen 7 und 9, **dadurch gekennzeichnet, dass** die Funktion "Vorbeugung" des Weiteren umfasst, dass die Steuerungsschaltung (3) den Wasser-Auslass über fünf Minuten bei wenigstens 65 ° aktiviert.

11. System für die Temperatursteuerung einer elektronischen Dusche nach den Ansprüchen 8 und 9, **dadurch gekennzeichnet, dass** die Funktion "Desinfektion" des Weiteren umfasst, dass die Steuerungsschaltung (3) den Wasser-Auslass über zehn Minuten bei wenigstens 65 ° aktiviert.

12. System für die Temperatursteuerung einer elektronischen Dusche nach einem der Ansprüche 7 bis 8, **dadurch gekennzeichnet, dass** die Funktion "Fehler" umfasst, dass die Meldung "E6" auf dem Bildschirm (9) angezeigt wird, wenn die Steuerungsschaltung (3) mittels des Temperatur-Sensors (5) erfasst, dass die Temperatur von wenigstens 65 °C für den Wasser-Auslass nicht in einem Zeitintervall erreicht wird, das kürzer ist als ein vorgegebener Zeitwert.

13. System für die Temperatursteuerung einer elektronischen Dusche nach einem der Ansprüche 10 bis 11, **dadurch gekennzeichnet, dass** die Funktion "Zyklus abgeschlossen" Anzeigen der Meldung "CO" auf dem Bildschirm (9) umfasst.

14. Verfahren für Vorbeugung/Desinfektion gegen Legionellen mittels des Systems für die Temperatursteuerung einer elektronischen Dusche nach einem der Ansprüche 5 bis 13, wobei das Verfahren Aktivieren der Funktion "Wärmeschock" umfasst, das die folgenden Schritte umfasst:
o Drücken (30) der An/Aus-Taste (10), der Taste (11) für positive Temperaturregulierung und der Taste (12) für negative Temperaturregulierung über fünf Sekunden; sowie Freigeben aller Tasten;
o Anzeigen (31) einer sich drehenden Quadratform auf dem Bildschirm (9);
o Wählen (32) mittels der An/Aus-Taste (10) zwischen der/dem Funktion/Modus "Vorbeugung", wenn die An/Aus-Taste (10) über fünf Sekunden gedrückt gehalten wird, und der/dem Funktion/Modus "Desinfektion", wenn die An/Aus-Taste (10) über zehn Sekunden gedrückt gehalten wird;
o Erhöhen (33) der Temperatur des Wassers auf 65 ° über einen Zeitraum von weniger als acht Minuten, und wobei:
▪ die Steuerungsschaltung (3) die Funktion "Fehler" aktiviert und ein Signal zu der Leucht-Steuerungsvorrichtung (8) zum Anzeigen der Meldung "E6" auf dem Bildschirm (9) sendet, wenn das System (1) die Temperatur des Wassers in dem Temperatur-Sensor (5) nicht in weniger als acht Minuten bis auf 65° erhöht;
▪ die Steuerungsschaltung (3) die Funktion "Sollwert-Temperatur erreicht" aktiviert und ein Signal zu der Leucht-Steuerungsvorrichtung (8) zum Anzeigen eines Wertes von "65 °" auf dem Bildschirm (9) sendet, wenn das System (1) die Temperatur des Wassers in dem Temperatur-Sensor (22) in weniger als acht Minuten bis auf 65 ° erhöht;
o automatisches Laufenlassen von Wasser bei wenigstens 65 ° über fünf Minuten oder zehn Minuten in Abhängigkeit davon, ob die Funktion "Vorbeugung" oder die Funktion "Desinfektion" jeweils für jeden der Wasser-Auslässe (19 bis 22) aktiviert worden ist, ohne menschlichen Eingriff und leuchtendes Anzeigen des Weges, über den das Wasser austritt, mittels der hinterleuchteten Tasten (13 bis 16);
o Anzeigen (35) der Meldung "CO" auf dem Bildschirm (9), die anzeigt, dass der Zyklus abgeschlossen worden ist, wenn der vollständige Zyklus beendet worden ist, und Warten darauf, dass ein Benutzer die An/Aus-Taste drückt.

## Revendications

1. Système de réglage de la température d'une douche électronique comprenant un boîtier de réglage électro-hydraulique (2) pouvant être placé de façon isolée par rapport à une zone humide où se trouve la douche électronique ; le boîtier de réglage électro-hydraulique (2) est raccordé à une source d'alimentation (7), à une entrée d'eau froide (17), à une entrée d'eau chaude (18) et à une pluralité de sorties d'eau (19, 20, 21, 22) ;
dans lequel le boîtier de réglage électro-hydraulique (2) comprend :
- un circuit de réglage (3) ;
- une vanne de régulation de température (4) pour l'entrée d'eau froide (17) et pour l'entrée d'eau chaude (18) ; dans lequel la vanne de régulation de température (4) comporte un moteur (23) commandé par le circuit de réglage (3) et est configurée pour mélanger l'eau provenant de l'entrée d'eau chaude et de l'entrée d'eau froide ;
- un capteur de température (5) se trouvant au niveau de la sortie de la vanne de régulation de température (4) ;
- une vanne sélectrice (6) pour les sorties d'eau (19, 20, 21, 22) raccordée à une sortie d'eau du capteur de température (5) et à une sortie d'eau sélectionnée parmi au moins l'une d'une pluralité de sorties d'eau (19, 20, 21, 22) ;
dans lequel le circuit de réglage (3) est raccordé électriquement à au moins la vanne de régulation de température (4), le capteur de température (5) et la vanne sélectrice (6) pour les sorties d'eau (19, 20, 21, 22) ;
dans lequel le système (1) comprend en outre :
• un dispositif de réglage lumineux (8) pouvant se trouver dans la zone humide où se trouve la douche électronique ; dans lequel le dispositif de réglage lumineux (8) est connecté électriquement au circuit de réglage (3) et dans lequel le dispositif de réglage lumineux (8) comprend au moins une interface d'entrée (10, 11, 12, 13, 14, 15), le circuit de réglage (3) étant configuré pour sélectionner une température d'au moins 65° Celsius pour la sortie d'eau du capteur de température (5), au moyen d'une activation codée pouvant être entrée par le biais de l'interface d'entrée (10, 11, 12, 13, 14, 15) du dispositif de réglage lumineux (8) ;
• le système étant **caractérisé en ce qu'**il comprend en outre un disque de limitation (26) qui est couplé à un axe de rotation du moteur (23) destiné à faire tourner le disque de limitation (26), dans lequel le disque de limitation (26) comprend un évidement périmétrique unique (27) et, lorsque l'évidement périmétrique unique (27) active mécaniquement un
interrupteur de fin de course du système, le circuit de réglage (3) détermine une position 0° du disque de limitation (26) qui correspond à une température minimale de l'eau au niveau de la sortie d'eau du capteur de température (5) ;
dans lequel le circuit de réglage (3), sur la base de la température mesurée par le capteur de température (5), est configuré pour faire tourner le disque de limitation (26) jusqu'à ce que la température d'eau minimale soit d'au moins 65° Celsius au niveau de la sortie d'eau du capteur de température (5).

2. Système de réglage de la température d'une douche électronique selon la revendication 1, **caractérisé en ce que** la pluralité de sorties d'eau est sélectionnée parmi au moins l'un de l'ensemble composé d'une pomme de douche (19), d'une pomme de douche à effet cascade (20), d'une pomme de douche à main (21) et de jets (22).

3. Système de réglage de la température d'une douche électronique selon la revendication 1, **caractérisé en ce que** la vanne sélectrice (6) pour la sortie d'eau est configurée pour sélectionner une sortie d'eau sélectionnée entre une pomme de douche (19), une pomme de douche à effet cascade (20), une pomme de douche à main (21), des jets (22) et une combinaison des éléments susmentionnés.

4. Système de réglage de la température d'une douche électronique selon la revendication 2 ou 3, **caractérisé en ce que** l'interface d'entrée du dispositif de réglage lumineux (8) comprend :
- un bouton marche/arrêt (10) pour mettre en marche/arrêter le système (1) ;
- un bouton de régulation de température positive (11) qui permet à la valeur de température d'être augmentée ;
- un bouton de régulation de température négative (12) qui permet à la valeur de température d'être diminuée ;
- un bouton sélecteur (13) pour la sortie d'eau à travers la pomme de douche (19) ;
- un bouton sélecteur (14) pour la sortie d'eau à travers la pomme de douche à effet cascade (20) ;
- un bouton sélecteur (15) pour la sortie d'eau à travers la pomme de douche à main (21) ; et
- un bouton sélecteur (16) pour la sortie d'eau à travers les jets (22).

5. Système de réglage de la température d'une douche électronique selon la revendication 1, **caractérisé en ce que** le dispositif de réglage lumineux (8) comprend par ailleurs un écran (9) indiquant au moins l'une des fonctions suivantes :
- « choc thermique », lequel inclut les fonctions de « prévention » et de « désinfection » ;
- « prévention » ;
- « désinfection » ;
- « température de consigne atteinte » ;
- « erreur » ;
- « cycle achevé ».

6. Système de réglage de la température d'une douche électronique selon les revendications 4 et 5, **caractérisé en ce que** l'activation codée pour réaliser la fonction « choc thermique » comprend l'enfoncement du bouton marche/arrêt (10), du bouton de régulation de température positive (11) et du bouton de régulation de température négative (12) pendant au moins cinq secondes, et le relâchement du bouton marche/arrêt (10), du bouton de régulation de température positive (11) et du bouton de régulation de température négative (12).

7. Système de réglage de la température d'une douche électronique selon la revendication 6, **caractérisé en ce que** l'activation codée pour réaliser la fonction « prévention » comprend la réalisation de la fonction « choc thermique » et comprend par ailleurs l'enfoncement du bouton marche/arrêt (10) pendant cinq secondes de telle sorte que le circuit de réglage (3) sélectionne une température d'au moins 65° Celsius pour la sortie d'eau.

8. Système de réglage de la température d'une douche électronique selon la revendication 6, **caractérisé en ce que** la fonction « désinfection » comprend la réalisation de la fonction « choc thermique » et comprend par ailleurs l'enfoncement du bouton marche/arrêt (10) pendant dix secondes de telle sorte que le circuit de réglage (3) sélectionne une température d'au moins 65° Celsius pour la sortie d'eau.

9. Système de réglage de la température d'une douche électronique selon l'une quelconque des revendications 7 à 8, **caractérisé en ce que** la fonction « température de consigne atteinte » comprend l'affichage de la valeur « 65° » sur l'écran (9) lorsque le circuit de réglage (3), au moyen du capteur de température (5), détecte que la température d'au moins 65° Celsius pour la sortie d'eau est atteinte dans un intervalle de temps inférieur à une valeur temps prédéterminée.

10. Système de réglage de la température d'une douche électronique selon les revendications 7 et 9, **caractérisé en ce que** la fonction « prévention » comprend par ailleurs le fait que le circuit de réglage (3) permet la sortie d'eau à au moins 65° pendant cinq minutes.

11. Système de réglage de la température d'une douche électronique selon les revendications 8 et 9, **caractérisé en ce que** la fonction « désinfection » comprend par ailleurs le fait que le circuit de réglage (3) permet la sortie d'eau à au moins 65° pendant dix minutes.

12. Système de réglage de la température d'une douche électronique selon l'une quelconque des revendications 7 à 8, **caractérisé en ce que** la fonction « erreur » comprend l'affichage du message « E6 » sur l'écran (9) lorsque le circuit de réglage (3), au moyen du capteur de température (5), détecte que la température d'au moins 65° Celsius n'est pas atteinte pour la sortie d'eau dans un intervalle de temps inférieur à une valeur temps prédéterminée.

13. Système de réglage de la température d'une douche électronique selon l'une quelconque des revendications 10 à 11, **caractérisé en ce que** la fonction « cycle achevé » comprend l'affichage du message « CO » sur l'écran (9).

14. Procédé de prévention/désinfection de légionella au moyen du système de réglage de la température d'une douche électronique selon l'une quelconque des revendications 5 à 13, dans lequel le procédé comprend l'activation de la fonction « choc thermique », laquelle comprend les étapes suivantes :
o l'enfoncement (30) pendant cinq secondes du bouton marche/arrêt (10), du bouton de régulation de température positive (11) et du bouton de régulation de température négative (12) ; et le relâchement de tous les boutons ;
o l'affichage (31) d'une forme carrée tournante sur l'écran (9) ;
o le choix (32), au moyen du bouton marche/arrêt (10), entre la fonction/le mode « prévention », si le bouton marche/arrêt (10) est maintenu appuyé pendant cinq secondes, et la fonction/le mode « désinfection », si le bouton marche/arrêt (10) est maintenu appuyé pendant dix secondes ;
o l'augmentation (33) de la température de l'eau jusqu'à 65° pendant une période inférieure à huit minutes et :
▪ si le système (1) n'arrive pas à amener l'eau dans le capteur de température (5) à 65° en moins de huit minutes, le circuit de réglage (3) active la fonction « erreur » et envoie un signal au dispositif de réglage lumineux (8) pour afficher le message « E6 » sur l'écran (9) ;
▪ si le système (1) parvient à amener l'eau au niveau de la sortie (19 à 22) de celui-ci à 65° en moins de huit minutes, le circuit de réglage (3) active la fonction « température de consigne atteinte » et envoie un signal au dispositif de réglage lumineux (8) pour afficher une valeur de « 65° » sur l'écran (9) ;
o le fait de laisser l'eau s'écouler à au moins 65° pendant cinq minutes ou dix minutes, selon que la fonction « prévention » ou la fonction « désinfection » a été activée ou non, respectivement, pour chacune des sorties d'eau (19 à 22) automatiquement sans intervention humaine et indiquant de manière lumineuse au moyen de boutons rétroéclairés (13 à 16) la voie par laquelle l'eau s'écoule ;
o l'affichage (35) du message « CO » sur l'écran (9) qui indique que le cycle est achevé, une fois que le cycle complet est terminé et l'attente qu'un utilisateur enfonce le bouton marche/arrêt.
